# EUROPEAN PATENT SPECIFICATION

(11) **EP 3 705 736 B1**
(45) Date of publication and mention of the grant of the patent: **06.03.2024**
(21) Application number: 18874923.8
(22) Date of filing: 30.10.2018
(51) Int. Cl.: F16B 5/12, F16B 2/22, F16C 1/10, F16C 1/26, F16B 2/24, H01R 13/74, F16B 21/18

(54) **FIXATION STRUCTURE**
BEFESTIGUNGSSTRUKTUR
STRUCTURE DE FIXATION

(30) Priority: 30.10.2017 JP 2017209623
(43) Date of publication of application: 09.09.2020
(73) Proprietor: HI-LEX Corporation, Takarazuka-shi, Hyogo 665-0845 (JP)
(72) Inventor: YOKOMATSU, Mutsuhiro, Takarazuka-shi Hyogo 665-0845 (JP); MAEDA, Haruyoshi, Takarazuka-shi Hyogo 665-0845 (JP)
(74) Representative: Hoffmann Eitle
(86) International application number: PCT/JP2018/040352
(87) International publication number: WO 2019/088109

(56) References cited:
- DE-B3-102004 023 867
- FR-A1- 2 781 262
- JP-A- H10 110 718
- JP-A- H10 210 634
- JP-A- 2003 336 619
- JP-U- S61 145 116
- JP-U- S61 145 116
- US-A- 5 347 882
- US-B2- 6 634 252

## Description

### Technical Field

The present invention relates to a fixing structure for fixing a long member to a bracket.

### Background Art

When a long member such as a control cable is to be attached to a mounting object, a fixing tool for fixing the long member to a bracket provided on the mounting object is provided at an end portion of the long member such that the long member is not displaced in an axial direction. As such a fixing tool, for example, a cable case in which an annular groove is provided on the outer peripheral surface of a cylindrical body portion is used, and is fixed to brackets provided on both ends of a substantially U-shaped holding portion by a snap ring with a pair of edges locked on the bracket (see JP 2003 336619 A).

FR 2 781 262 A1 discloses the fitting of a circular body into a cutout formed in the body of a support by means of a spring clip which lodges in a throat of the body so that the body engages in the bottom of the cutout when pushed down into it. The clip has two profiled zones which engage into slots provided on the inside of the cutout, towards its open end. The profiled zones engage with these slots when the body is pressed home and the clip has taking up its normal shape, thus blocking the clip and hence the body in position.

DE 10 2004 023 867 B3 discloses the fixing element which has a fixing member acting axially relative to the centre axis of the operating cord so that in the assembled state an abutment engages in the fixing member. The fixing member is formed by a groove in each of the holding parts which form the socket opening which holds the cord. The groove can be formed by two side attachments on the holding part with one attachment having an inward curvature and one having an outward curvature.

### Summary of Invention

### Technical Problem

However, when the cable case is fixed to the bracket using such a snap ring, the snap ring is twisted due to the swinging of the cable. If such a twist occurs in the snap ring, there is a risk that the bracket and the cable case may come off. Therefore, on the bracket, it is necessary to provide a complicated structure such as a stopper for preventing the snap ring from coming off the bracket.

An object of the present invention is to provide a fixing structure capable of fixing a terminal of a long member to a bracket with a simple structure.

### Solution to Problem

A fixing structure according to the present invention is defined by claim 1.

### Advantageous Effects of Invention

According to the fixing structure of the present invention, the terminal of the long member can be fixed to the bracket with a simple structure.

### Brief Description of Drawings

Fig. 1 is a perspective view of a fixing structure according to an embodiment of the present invention.
Fig. 2 is a schematic side view of the fixing structure, which illustrates a state before a clip is attached to a terminal member of the fixing structure illustrated in Fig. 1.
Fig. 3 is a schematic side view of the fixing structure, which illustrates a state after the clip is attached to the terminal member of the fixing structure illustrated in Fig. 1.
Fig. 4 is a perspective view of the clip used for the fixing structure illustrated in Fig. 1.
Fig. 5 is a schematic view of the fixing structure illustrated in Fig. 1, which illustrates a state before the clip and a bracket are engaged with each other.
Fig. 6 is a schematic diagram illustrating a state in which a biasing portion and a connection portion of the clip have been deformed from the state illustrated in Fig. 5, and a clip-side engagement portion of the clip has approached.
Fig. 7 is a schematic diagram illustrating a state in which the terminal member has further moved in an insertion direction from the state illustrated in Fig. 6, and the clip-side engagement portion of the clip has engaged with a bracket-side engagement portion of the bracket.
Fig. 8 is a schematic diagram of another embodiment of the fixing structure of the present invention using a clip different from the clip of Fig. 1.
Fig. 9 is a schematic diagram of a fixing structure according to a third embodiment of the present invention.

### Description of Embodiments

Hereinafter, a fixing structure according to an embodiment of the present invention will be described with reference to the drawings. The following embodiment is merely an example, and the fixing structure of the present invention is not limited to the following embodiment.

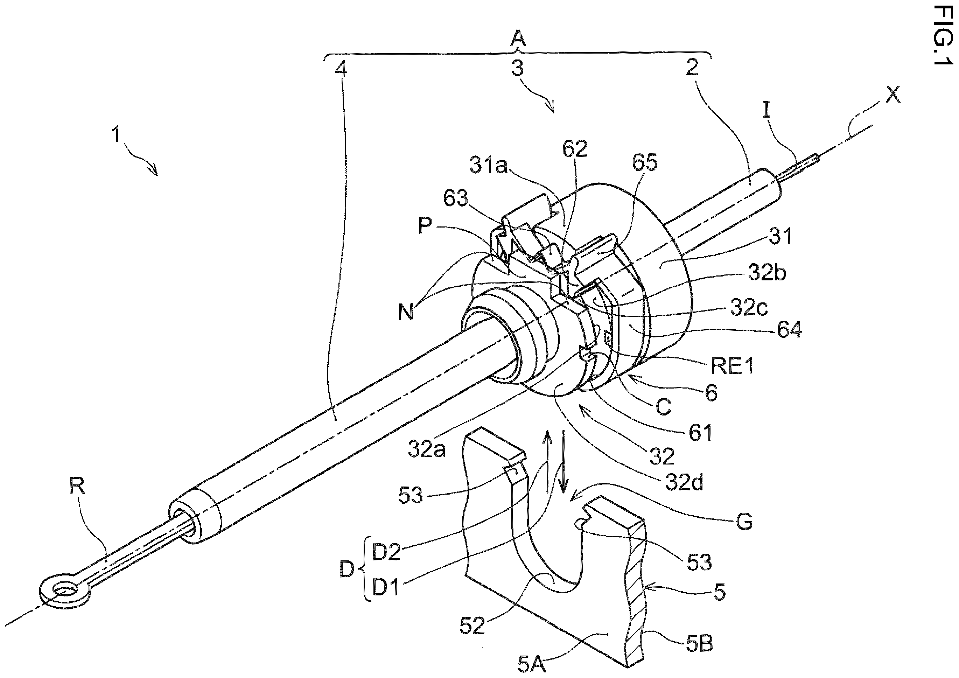

As illustrated in Fig. 1, the fixing structure 1 of the present invention includes: a first long member 2; a terminal member 3 that is provided at a terminal of the first long member 2; and a second long member 4 that connects to the terminal member 3 on a side opposite to the first long member 2; a bracket 5 to which the terminal member 3 is fixed, and a clip 6 that suppresses relative movement of the terminal member 3 with respect to the bracket 5.

The fixing structure 1 is a structure for fixing a long member to the bracket 5. The fixing structure 1 attaches each of the first long member 2, the terminal member 3, the second long member 4, and the like to a predetermined mounting object (not shown) via the bracket 5. In the present invention, the fixing structure 1 fixes a long member assembly A including the first long member 2, the terminal member 3, and the second long member 4 to the bracket 5. In the present embodiment, the long member assembly A is a control cable assembly, and is attached to a vehicle body as a mounting object via the bracket 5. The mounting object of the fixing structure 1 is not limited to a vehicle body, and the long member assembly A is not limited to a control cable assembly.

The first long member 2 is a long member in which the terminal member 3 is provided at one terminal. The first long member 2 is attached to the bracket 5 via the terminal member 3. The shape and structure of the first long member 2 are not particularly limited as long as it is the long member fixed to the bracket 5 via the terminal member 3. In the present embodiment, the first long member 2 is an outer casing of a control cable (hereinafter, referred to as an outer casing 2). An inner cable I is inserted into the outer casing 2. The inner cable I is inserted into the outer casing 2, the terminal member 3, and the second long member 4. One terminal of the inner cable I is connected via a rod R to an operation portion (not shown) such as a shift lever, and the other terminal is connected to an operated portion (not shown) such as a transmission. The inner cable I is operated by operating the operation portion, and the operation force of the inner cable I is transmitted to the operated portion. One terminal of the outer casing 2 is attached to the bracket 5 via the terminal member 3, and the other terminal (not shown) is attached to the operation portion side.

As shown in Fig. 1, the second long member 4 is a long member that is connected to the terminal member 3 on a side opposite to the first long member 2 in an axis X direction (an axial direction of the first long member 2). The second long member 4 is fixed to the bracket 5 via the terminal member 3. The shape and structure of the second long member 4 are not particularly limited as long as the long member is fixed to the bracket 5 via the terminal member 3. In the present embodiment, the second long member 4 is a guide pipe (hereinafter, referred to as guide pipe 4). The guide pipe 4 is swingably attached to the terminal member 3, and guides the inner cable I inserted into the guide pipe 4 in a desired direction. The guide pipe 4 is formed in a substantially cylindrical shape, and the rod R connected to the operated portion such as a transmission is slidably inserted inside, and the inner cable I connected to the rod R is movably inserted inside.

The terminal member 3 is provided at a terminal of the first long member 2. When the terminal member 3 is attached to the bracket 5, the first long member 2 and the second long member 4 are attached to the bracket 5, and the first long member 2 and the second long member 4 are supported in a predetermined routing path. In the present embodiment, the terminal member 3 has a main body portion 31 to which the terminal of the first long member 2 is attached, and an attachment portion 32 to be attached to the bracket 5 as shown in Figs. 1 to 3. In the present embodiment, the terminal member 3 has openings at both ends in the axis X direction, and has an inner space portion communicating with the openings at both ends. The inner space portion of the terminal member 3 penetrates the main body portion 31 and the attachment portion 32 aligned in the axis X direction. An elastic member (not shown) is provided in the inner space portion of the terminal member 3. The elastic member is provided between an outer periphery of the first long member 2 inserted into the terminal member 3 and an inner periphery of the terminal member 3, and between an outer periphery of the second long member 4 and the inner periphery of the terminal member 3 to absorb vibration transmitted to the first long member 2 and the second long member 4.

The main body portion 31 is provided on one end side of the terminal member 3 which is the first long member 2 side as seen in the axis X direction. In the present embodiment, the main body portion 31 is substantially cylindrical shape as shown in Fig. 1, but the shape of the main body portion 31 is not particularly limited.

The attachment portion 32 is a part attached to the bracket 5 of the terminal member 3. In the present embodiment, the attachment portion 32 is provided on the other end side of the terminal member 3 which is the second long member 4 side as seen in the axis X direction. However, the position of the attachment portion 32 is not limited as far as the terminal member 3 can be attached to the bracket 5.

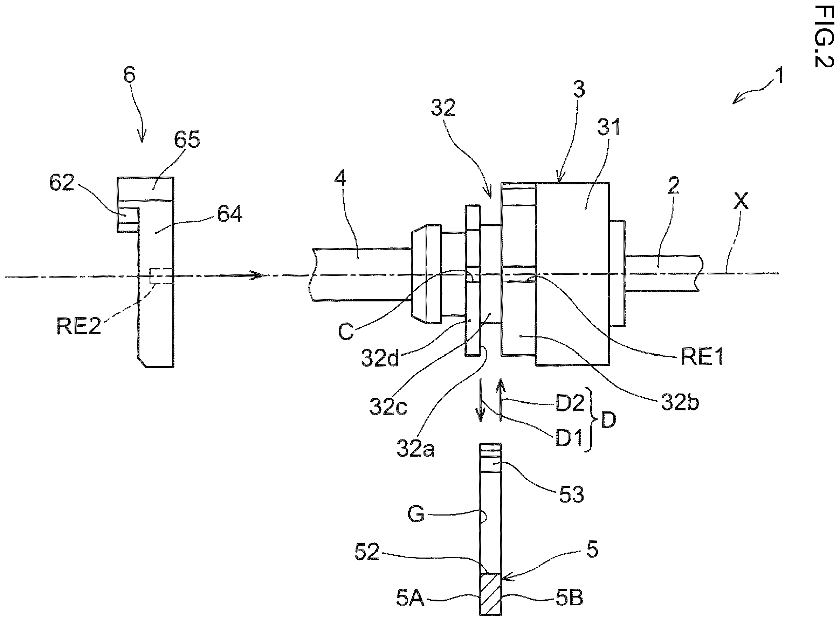

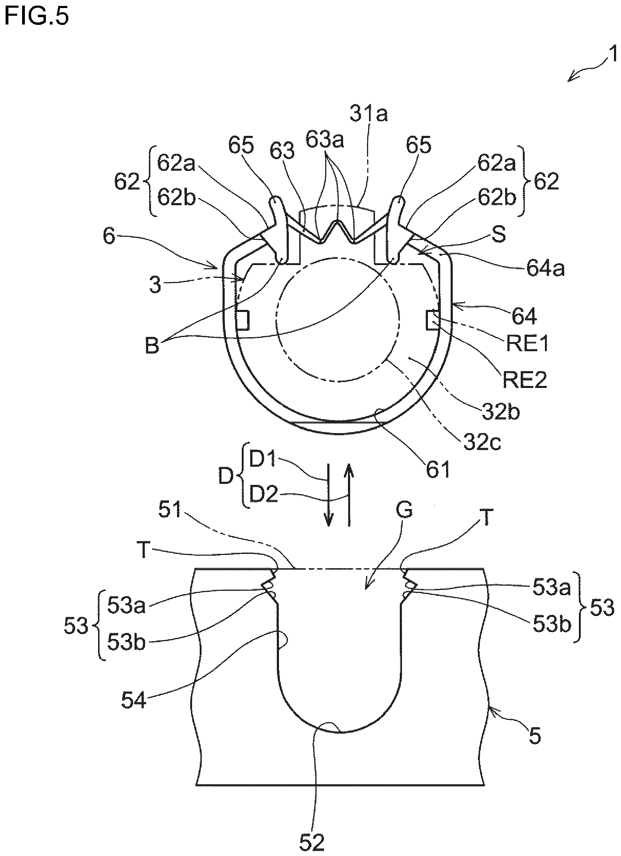

As shown in Fig. 2, the terminal member 3 includes an engagement portion 32a that engages with the bracket 5 to suppress movement in the axis X direction, and a mounting target portion 32b that is provided on the outer periphery and to which the clip 6 is mounted. In the present embodiment, the engagement portion 32a and the mounting target portion 32b are provided on the attachment portion 32. As shown in Fig. 2, the mounting target portion 32b is provided at an end of the attachment portion 32 on one side (the main body portion 31 side) as seen in the axis X direction. A shaft portion 32c is provided on the other side as seen in the axis X direction (the left side in Fig. 2) of the mounting target portion 32b. The shaft portion 32c is formed in a size capable of being inserted from an insertion portion 51 (see Fig. 5) of the bracket 5 described later and capable of being installed at an installation portion 52 (see Fig. 5). A flange portion 32d is further provided on the other side as seen in the axis X direction with respect to the shaft portion 32c of the attachment portion 32. The flange portion 32d has the engagement portion 32a and protrudes beyond the shaft portion 32c in a direction perpendicular to the axis X direction.

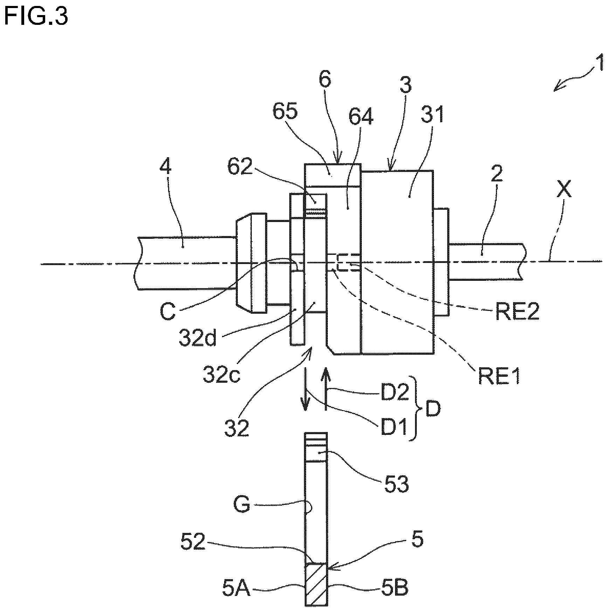

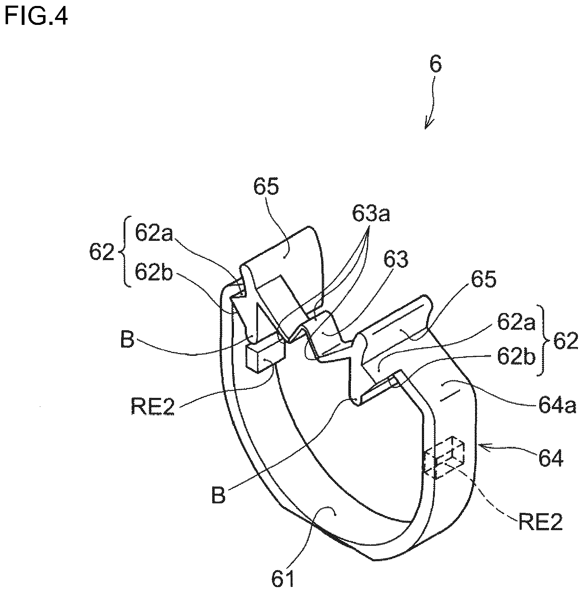

The mounting target portion 32b is a part to which the clip 6 is mounted. As shown in Figs. 1 and 3, the clip 6 is mounted on the outer periphery of the mounting target portion 32b. The size and shape of the mounting target portion 32b are arbitrary as long as a mounting portion 61 of the clip 6 described later can be mounted. In the present embodiment, the mounting target portion 32b is formed in a substantially cylindrical shape having an outer peripheral surface shaped corresponding to the shape of the mounting portion 61 of the clip 6. In the present embodiment, the mounting target portion 32b corresponds to the inner peripheral shape of the clip 6. As shown in Figs. 1 to 3, the mounting target portion 32b has a restriction portion RE1 that restricts circumferential movement of the clip 6 with respect to the terminal member 3. The restriction portion RE1 circumferentially engages with a restricted portion RE2 (see Fig. 4) provided on the mounting portion 61 of the clip 6, and prevents the clip 6 attached to the terminal member 3 from moving in the circumferential direction. In the present embodiment, the restriction portion RE1 of the mounting target portion 32b is a concave portion, and the restricted portion RE2 of the clip 6 is a convex portion. However, the shape and structure of the restriction portion RE1 and the restricted portion RE2 are not particularly limited as long as the circumferential movement of the clip 6 can be restricted, and the restriction portion RE1 and the restricted portion RE2 may be reversed in concave and convex or both of them may be convex portions. The engagement of the outer periphery of the mounting target portion 32b with the inner periphery of the clip 6 suppresses axial rotation of the clip 6.

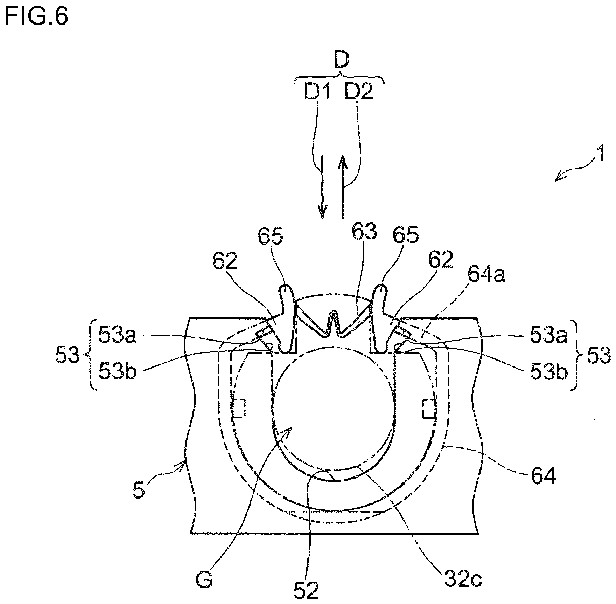

The shaft portion 32c is a part that is inserted from the insertion portion 51 of the bracket 5 and installed on the installation portion 52 as shown in Figs. 5 and 6. The shape of the shaft portion 32c is not particularly limited as long as it can be inserted from the insertion portion 51 of the bracket 5 and can be installed on the installation portion 52. In the present embodiment, the shaft portion 32c is formed in a substantially cylindrical shape.

The engagement portion 32a engages with the bracket 5 to suppress the movement of the terminal member 3 in the axis X direction. The engagement portion 32a sandwiches the bracket 5 together with the clip 6 in the thickness direction of the bracket 5. The engagement portion 32a is a portion facing one surface 5A of the bracket 5 (see Figs. 2 and 3) when the terminal member 3 is attached to the bracket 5. The engagement portion 32a is disposed on the one surface 5A side of the bracket 5, and the engagement portion 32a abuts on the one surface 5A of the bracket 5 to suppress the movement of the terminal member 3 to one side as seen in the axis X direction. The movement of the terminal member 3 to the other side as seen in the axis X direction is suppressed by the clip 6 (an end face of a biasing portion 64 described later as seen in the axis X direction) abutting on the other surface 5B of the bracket 5 (see Figs. 2 and 3).

In the present embodiment, as shown in Figs. 2 and 3, the engagement portion 32a is a flat surface that is provided on one side of the flange portion 32d as seen in the axis X direction and is capable of engagement with the one surface 5A of the bracket 5. The shape of the engagement portion 32a is not particularly limited as long as it can abut on the bracket 5 and restrict the movement of one side of the terminal member 3 as seen in the axis X direction.

In the present embodiment, the flange portion 32d with the engagement portion 32a projects radially outward with respect to the outer periphery of the shaft portion 32c as shown in Figs. 2 and 3. The shape and size of the flange portion 32d are not particularly limited, but the flange portion 32d preferably allows the clip 6 to move to the mounting target portion 32b in the axis X direction beyond the flange portion 32d. For example, as shown in Fig. 1, the flange portion 32d can be shaped to have a notch portion through which clip-side engagement portions 62 described later, are to pass when the clip 6 is inserted into the terminal member 3 in the axis X direction (see Figs. 2 and 3). In the present embodiment, as shown in Fig. 1, the flange portion 32d has a pair of notch portions N such that the clip-side engagement portions 62 are movable without abutment on the flange portion 32d in the axis X direction at an end of the terminal member 3 on a removal direction D2 side as seen in insertion/removal directions D with respect to the bracket 5 (upper end side in Fig. 1). There is provided a protrusion portion P that protrudes in the removal direction D2 between the pair of notch portions N. The insertion/removal directions D here refer to two directions of the direction in which the terminal member 3 is inserted into the bracket 5 and the direction in which the terminal member 3 is removed from the bracket 5. The insertion direction D1 refers to the direction in which the terminal member 3 moves at the time of insertion into the bracket 5 (downward direction in Fig. 1), and the removal direction D2 refers to the direction in which the terminal member 3 moves at the time of removal from the bracket 5 (upward direction in Fig. 1).

As shown in Fig. 1, the flange portion 32d may have a concave groove C though which the restricted portion RE2 of the clip 6 can pass in the axis X direction (or may have a convex portion if the restricted portion RE2 is a concave portion) at a position corresponding to the restriction portion RE1 of the mounting target portion 32b as seen in the circumferential direction of the terminal member 3. Thereby, the restricted portion RE2 of the clip 6 is guided along the concave groove (or the convex portion) of the flange portion 32d, which facilitates the engagement of the restriction portion RE1 of the mounting target portion 32b with the restricted portion RE2.

The bracket 5 is a part to which the terminal member 3 is attached. By attaching the terminal member 3 to the bracket 5, the long member assembly A is attached to a mounting object such as a vehicle body. In the present embodiment, the bracket 5 is configured as a plate-like attachment part as shown in Figs. 1 to 3. The structure of the bracket 5 is not particularly limited, and the bracket 5 may be a plate-shaped member or a box-shaped member having plate-shaped walls.

As shown in Fig. 5, the bracket 5 includes an insertion portion 51 into which the terminal member 3 is inserted, an installation portion 52 at which the terminal member 3 is installed, and bracket-side engagement portions 53 with which the clip 6 engages. In the present embodiment, as shown in Figs. 1 and 5, the bracket 5 has a groove G that is cut out in a groove shape in a plate-like member. The insertion portion 51, the installation portion 52, and the bracket-side engagement portions 53 are provided in the groove G. In the present embodiment, the groove G is shown as a part cut out in a substantially U shape from the edge of the plate-shaped bracket 5, but the shape of the groove G is not particularly limited.

The insertion portion 51 is a part that serves as an entrance from which the terminal member 3 is inserted in the process of installing the terminal member 3 on the installation portion 52 of the bracket 5. In the present embodiment, the insertion portion 51 is formed at an edge of the plate-shaped bracket 5, but the insertion portion 51 may be, for example, a through hole through which the terminal member 3 can be inserted in a direction perpendicular to the plate-shaped bracket 5. The shaft portion 32c of the terminal member 3 and the clip-side engagement portion 62 of the clip 6 are inserted into the insertion portion 51. In the present embodiment, the end of the bracket 5 on the insertion portion 51 side has a tapered portion T of which width (the horizontal direction in Fig. 5) becomes narrower in the insertion direction D1 of the terminal member 3. The provision of the tapered portion T facilitates the movement of the shaft portion 32c and the clip-side engagement portion 62 in the insertion direction D1. There is provided a guide portion 54 for guiding the shaft portion 32b of the terminal member 3 between the insertion portion 51 and the installation portion 52 (in the present embodiment, the insertion direction D1 side with respect to the bracket-side engagement portion 53).

The installation portion 52 is a part where the terminal member 3 is installed. In the present embodiment, the shaft portion 32c of the terminal member 3 is installed at the installation portion 52. It is preferable that the shape of the installation portion 52 be a shape following the outer shape of the shaft portion 32c. However, the shape of the installation portion 52 is not particularly limited as long as the terminal member 3 (the shaft portion 32c) can be installed there. The installation portion 52 is combined with the installation portion provided in the terminal member 3, so that the terminal member 3 is installed in the bracket 5. The installation target portion is formed as a space above the surface of the flange portion 32d on the mounting target portion side and the shaft portion 32c between the mounting target portion 32b and the flange portion 32d. The terminal member 3 may hold the bracket 5 between the clip 6 mounted on the mounting target portion 32b and the flange portion.

The bracket-side engagement portion 53 engages with the clip-side engagement portion 62 of the clip 6. Although the details will be provided later, the engagement of the clip-side engagement portion 62 with the bracket-side engagement portion 53 suppresses the movement of the clip 6 in the direction perpendicular to the axis X direction. The shape of the bracket-side engagement portion 53 is not particularly limited but can be changed as appropriate according to the shape of the clip-side engagement portion 62 as long as it can engage with the clip-side engagement portion 62 to suppress the movement of the clip 6 in the direction perpendicular to the axis X direction.

In the present embodiment, as shown in Fig. 5, the bracket-side engagement portion 53 includes a first wall portion 53a provided on the removal direction D2 side and a second wall portion 53b provided on the insertion direction D1 side. The first wall portion 53a and the second wall portion 53b are inclined with respect to a direction perpendicular to the insertion direction D1 to form a substantially triangular concave portion.

Although the bracket-side engagement portion 53 is shown as a concave portion in the present embodiment, the clip-side engagement portion 62 may be a concave portion and the bracket-side engagement portion 53 may be a convex portion. The bracket-side engagement portion 53 only needs to have at least a part that engages with the clip-side engagement portion 62, and is not necessarily the same in shape and size as the clip-side engagement portion 62. In the present embodiment, the bracket-side engagement portion 53 is configured such that the groove G of the bracket 5 is formed into a predetermined shape. Alternatively, the bracket-side engagement portion 53 may be configured to engage with the clip-side engagement portion 62 by separately providing a protrusion portion at a part other than the groove G in the bracket 5.

The clip 6 is attached to the terminal member 3 and attached to the bracket 5. The clip 6 suppresses the relative movement of the terminal member 3 with respect to the bracket 5. The relative movement of the terminal member 3 with respect to the bracket 5 includes, for example, the movement of the terminal member 3 with respect to the bracket 5 in the axis X direction and the movement of the terminal member 3 with respect to the bracket 5 in a direction perpendicular to the axis X direction such as the removal direction D2 and a direction perpendicular to the insertion direction D1 and the axis X direction.

As shown in Fig. 4, the clip 6 includes: a mounting portion 61 that is mounted on the mounting target portion 32b; clip-side engagement portions 62 that engage with the bracket-side engagement portions 53, a connection portion 63 that connects between the clip-side engagement portions 62, and a biasing portion 64 that connects to the clip-side engagement portions 62.

The shape and structure of the clip 6 are not particularly limited as long as the clip 6 has the mounting portion 61, the clip-side engagement portions 62, the connection portion 63, and the biasing portion 64. According to the invention, as shown in Figs. 4 and 5, the clip 6 is formed in an annular shape in which removal from the terminal member 3 in the direction perpendicular to the axis X direction of the first long member 2 is suppressed. Specifically, the clip-side engagement portions 62, the connection portion 63, and the biasing portion 64 are arranged in an annular shape. Forming the clip 6 in an annular shape suppresses the clip 6 from being removed from the terminal member 3 in the direction perpendicular to the axis X direction in a state before the terminal member 3 is assembled to the bracket 5 during transportation or the like. Therefore, it is possible to suppress the clip 6 from being lost, for example, when the long member assembly A to which the clip 6 is assembled is transported. The material of the clip 6 is preferably, for example, a synthetic resin or metal having flexibility.

The mounting portion 61 is a part that is mounted on the mounting target portion 32b of the terminal member 3. The shape of the mounting portion 61 is not particularly limited as long as the mounting portion 61 can be mounted on the mounting target portion 32b of the terminal member 3. In the present embodiment, the mounting portion 61 constitutes an inner surface of a substantially U-shaped part (biasing portion 64) mounted on the outer periphery of the mounting target portion 32b of the terminal member 3. The mounting portion 61 is mounted along at least a part of the outer circumference of the mounting target portion 32b.

As described above, the clip-side engagement portions 62 engage with the bracket-side engagement portions 53 of the bracket 5 to suppress the terminal member 3 from moving in the direction perpendicular to the axis X direction with respect to the bracket 5. As shown in Fig. 4, the clip-side engagement portions 62 are shifted in the axis X direction from the mounting portion 61 and the biasing portion 64. In the present embodiment, the clip-side engagement portions 62 continue to the biasing portion 64 at an end of the biasing portion 64 on the removal direction D2 side.

In the present embodiment, the clip-side engagement portions 62 are provided in a pair as shown in Figs. 4 to 6. The pair of clip-side engagement portions 62 respectively engages with the pair of bracket-side engagement portions 53 provided on the bracket 5. The pair of clip-side engagement portions 62 is separated from each other by a distance corresponding to the separation distance between the pair of bracket-side engagement portions 53.

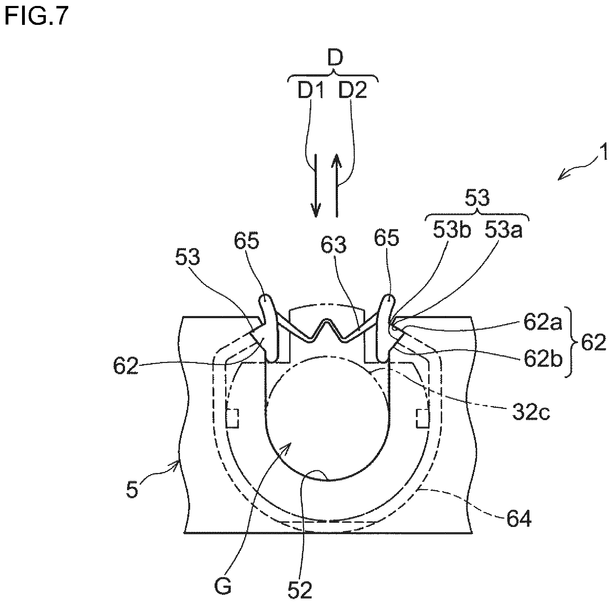

The shape of the clip-side engagement portions 62 is not particularly limited as long as the clip-side engagement portions 62 can engage with the bracket-side engagement portions 53 to suppress the movement of the terminal member 3 in the direction perpendicular to the axis X direction with respect to the bracket 5. In the present embodiment, as shown in Figs. 4 and 5, the pair of clip-side engagement portions 62 protrudes outward (in a direction in which the pair of clip-side engagement portions 62 is separated from each other) from plate-like bases B extending in the insertion/removal direction D. In the present embodiment, as shown in Figs. 4 and 5, each of the clip-side engagement portions 62 includes a first engagement portion 62a provided on the removal direction D2 side and a second engagement portion 62b provided on the insertion direction D1 side. As shown in Fig. 7, the first engagement portion 62a engages with the first wall portion 53a of the bracket-side engagement portion 53 to suppress the movement of the terminal member 3 from the bracket 5 in the removal direction D2. The second engagement portion 62b engages with the second wall portion 53b. The second engagement portion 62b and the second wall portion 53b are inclined with respect to the insertion direction D1 to suppress the movement of the terminal member 3 in directions perpendicular to the insertion direction D1 and the axis X direction (for example, the horizontal direction in Fig. 7). In the present embodiment, both the first engagement portion 62a and the second engagement portion 62b are inclined with respect to the insertion direction D1. Alternatively, at least one of the first engagement portion 62a and the second engagement portion 62b may be inclined with respect to the insertion direction D1. In the present embodiment, the pair of the clip-side engagement portions 62 and the pair of the bracket-side engagement portions 53 are provided. However, the numbers of the clip-side engagement portions 62 and the bracket-side engagement portions 53 are not particularly limited.

In the present embodiment, the clip 6 has a pair of knobs 65 as shown in Figs. 4 and 5. When the knobs 65 are operated to approach each other, the clip-side engagement portions 62 move so as to approach each other. The knobs 65 are operated, for example, to insert into the terminal member 3 into the bracket 5 or to remove the terminal member 3 from the bracket 5. The shape of the knobs 65 is not particularly limited. In the present embodiment, the knobs 65 are formed in a plate shape extending in the insertion/removal direction D, and are provided on the removal direction D2 side of the clip-side engagement portions 62. The knobs 65 are continuous to the bases B of the clip-side engagement portions 62. When the knobs 65 are operated, the clip-side engagement portions 62 move.

In the present embodiment, as shown in Figs. 1 and 5, the main body portion 31 of the terminal member 3 has a protrusion 31a projecting from the end face of the main body portion 31 between the pair of knobs 65 in the axis X direction. The protrusion 31a has a predetermined gap from each of the pair of knobs 65. These gaps are sized, for example, such that the clip-side engagement portions 62 are brought close to each other by a predetermined distance by operating the knobs 65 to allow the clip 6 to be inserted from the insertion portion 51 of the bracket 5. When the knobs 65 are operated to deform the clip 6, the protrusion 31a can keep the operation amount of the knobs 65 within a predetermined range, thereby suppressing the clip 6 from becoming damaged due to excessive deformation of the knobs 65. The protrusion 31a may protrude from the end of the mounting target portion 32b of the terminal member 3 on the removal direction D2 side between the pair of knobs 65 in the removal direction D2.

The connection portion 63 connects the clip-side engagement portions 62 that are separated from each other in the circumferential direction of the terminal member 3 (a direction perpendicular to the insertion direction D1). The connection portion 63 is located on the removal direction D2 side of the terminal member 3 in a state where the clip 6 is attached to the terminal member 3. The connection portion 63 has spring elasticity that allows the clip-side engagement portions 62 to separate from and come close to each other. Therefore, when the clip-side engagement portions 62 come closer to each other than in the initial state, the spring elasticity of the connection portion 63 applies a biasing force in a direction in which the clip-side engagement portions 62 separate from each other. When the clip-side engagement portions 62 are more separated from each other than in the initial state, the spring elasticity of the connection portion 63 applies a biasing force in a direction in which the clip-side engagement portions 62 come close to each other.

The shape and structure of the connection portion 63 are not particularly limited as long as the connection portion 63 has spring elasticity that allows the clip-side engagement portions 62 to separate from and come close to each other. In the present embodiment, as shown in Figs. 4 and 5, the connection portion 63 has a zigzag shape. Specifically, the connection portion 63 is formed in a bent plate shape, and the plate-shaped connection portion 63 has folded portions 63a on the insertion direction D1 side and the removal direction D2 side. The folded portion 63a on the insertion direction D1 side of the connection portion 63 may be configured to engage in the axis X direction with the protrusion portion P (see Fig. 1) provided on the removal direction D2 side of the flange portion 32d, for example. In this case, it is possible to suppress removal of the clip 6 from the terminal member 3 in the axis X direction in a state before being assembled to the bracket 5 such as during transportation. In the present embodiment, the connection portion 63 is integrated with the clip-side engagement portions 62. Alternatively, the connection portion 63 may be provided separately from the clip-side engagement portions 62.

The biasing portion 64 is connected to the clip-side engagement portions 62. The biasing portion 64 is elastically deformed in accordance with the separation and approach of the clip-side engagement portions 62, and generates a biasing force in a direction opposite to the direction of displacement of the clip-side engagement portions 62 from the initial positions. As shown in Fig. 5, in a state where the clip 6 is attached to the terminal member 3, there is a space S of a predetermined size between the mounting target portion 32b of the terminal member 3 and an inner surface of deformation portions 64a provided on both ends of the biasing portion 64 located on the removal direction D2 side. The space S allows the deformation portions 64a of the biasing portion 64 to bend inward when the clip-side engagement portions 62 approach each other.

The shape of the biasing portion 64 is not particularly limited. However, in the present embodiment, the biasing portion 64 is substantially U-shaped as shown in Figs. 4 and 5. Both ends of the substantially U-shaped biasing portion 64 located on the removal direction D2 side are connected to the clip-side engagement portions 62. The biasing portion 64 is sized to protrude toward outside the groove G in a direction perpendicular to the axis X direction beyond the edge of the groove G of the bracket 5 when the terminal member 3 is attached to the bracket 5 (see Fig. 6). Therefore, the end face of the biasing portion 64 as seen in the axis X direction can abut on the other surface 5B of the bracket 5, thereby to suppress the movement of the terminal member 3 to the other side in the axis X direction. In the present embodiment, the end face of the biasing portion 64 is configured to abut on the other surface 5B of the bracket 5. Alternatively, the end face of the mounting target portion 32b of the terminal member 3 may be configured to abut on the other surface 5B of the bracket 5.

In the fixing structure 1 of the present invention, as described above, the bracket 5 has the bracket-side engagement portions 53, and the clip 6 has the clip-side engagement portions 62 that engage with the bracket-side engagement portions 53, the connection portion 63 having spring elasticity, and the biasing portion 64 connected to the clip-side engagement portions 62. As shown in Fig. 7, in a state where the terminal member 3 is installed on the installation portion 52 of the bracket 5 via the insertion portion 51, the clip-side engagement portions 62 of the clip 6 mounted on the mounting target portion 32b of the terminal member 3 engage with the bracket-side engagement portions 53. Thereby, the movement of the terminal member 3 in the axis X direction of the first long member 2 and in the direction perpendicular to the axis X direction is suppressed. The movement of the terminal member 3 in the axis X direction is suppressed by the engagement of the engagement portion 32a of the terminal member 3 and the clip 6 with the one surface 5A and the other surface 5B of the bracket 5 in the axis X direction. Further, the movement of the terminal member 3 in the direction perpendicular to the axis X direction is suppressed by the engagement of the clip-side engagement portions 62 with the bracket-side engagement portions 53. Therefore, there is no need for an additional member other than the clip 6 for suppressing removal of the terminal member 3 and the like.

In the present invention, the clip-side engagement portions 62 are connected to the biasing portion 64 and the connection portion 63. As shown in Figs. 6 and 7, the clip-side engagement portions 62 are once deformed in a direction approaching each other when being inserted into the bracket 5 (see Fig. 6), and then are subjected to a biasing force in a direction separating from each other by the biasing portion 64 and the connection portion 63 when engaging with the bracket-side engagement portions 53 (see Fig. 7). Therefore, the clip-side engagement portions 62 are pressed against the bracket-side engagement portions 53 to increase the engaging force, thereby suppressing the movement of the terminal member 3 from the bracket 5 in the removal direction D2. Further, pressing the clip-side engagement portions 62 against the bracket-side engagement portions 53 makes it possible to suppress rattling and movement of the clip 6 with respect to the bracket 5 in the axis X direction and the direction perpendicular to the insertion direction D1 (the horizontal direction in Fig. 7) even with a dimensional tolerance or vibrations applied to the terminal member 3 from the first long member 2 and the second long member 4.

As another embodiment, the fixing structure 1 may use a clip partially different in configuration from the above-described one. The clip 6 of the present embodiment has a mounting portion 61 and two clip-side engagement portions 62. The clip 6 has a biasing portion 64 provided between the mounting portion 61 and the clip-side engagement portions 62. A connection portion 63 is provided between the two clip-side engagement portions 62. The connection portion 63 has two extension portions 631 and a flexible portion 632 provided between the extension portions 631. The extension portions 631 are provided so as to extend from one clip-side engagement portion 62 toward the other clip-side engagement portion 62. The flexible portion 632 is connected to the ends of the two extension portions 631. The biasing portion 64 has a deformation portion 64a and linear portions 641 that extend linearly from the deformation portions 64a and connect to the engagement portions 62. The biasing portion 64 has a bent shape as a whole, with the deformation portion 64a, one linear portion 641, and the other linear portion 642 connected to the mounting portion 61.

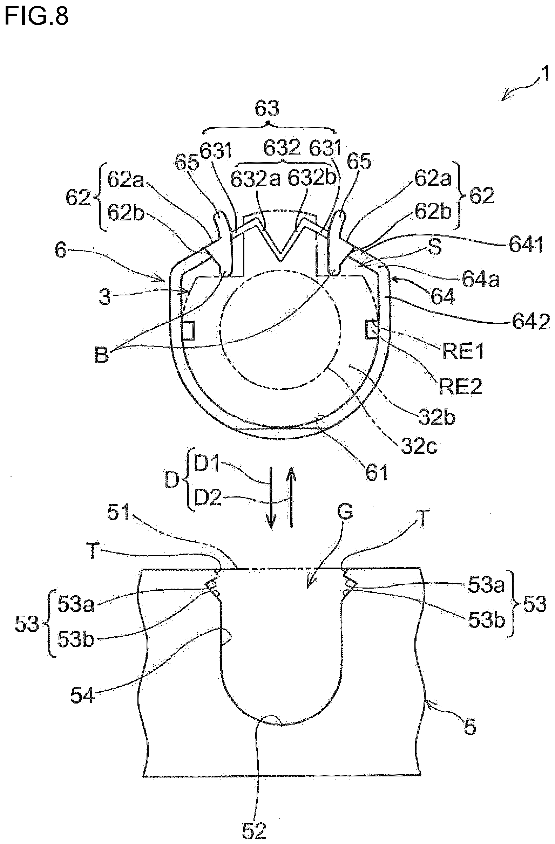

In the embodiment shown in Fig. 8, each of the extension portions 631 has one end connected to the clip-side engagement portion 62 and the other end connected to the flexible portion 632. The flexible portion 632 has two elements: a first element 632a connected to one extension portion 631; and a second element 632b connected to the other extension portion 631. The flexible portion 632 is capable of elastic deformation with a change in the angle between the first element 632a and the second element 632b that are connected in a bent shape.

The clip 6 in the embodiment shown in Fig. 8 has the same basic structure as the embodiment shown in Fig. 1.

As shown in Fig. 8, the fixing structure 1 according to another embodiment uses the clip 6 having the connection portion structured differently from that of the above-described embodiment. First engagement portions 62a of the clip-side engagement portions 62 abut on first wall portions 53a of bracket-side engagement portions 53 of a bracket 5. The first engagement portions 62a of the clip-side engagement portions 62 and the first wall portions 53a of the bracket-side engagement portions 53 have abutment surfaces. When the abutment surfaces of the first engagement portions 62a and the abutment surfaces of the first wall portions 53a slide on each other to clear the abutment, the clip 6 comes off from the bracket 5. In the embodiment of Fig. 8, the extension portions 631 of the connection portion 63 extend substantially parallel to the abutment surfaces of the first engagement portions 62a. Therefore, even if an external force is applied to the terminal member 3 in a direction from an installation portion 52 toward an insertion portion 51 of the bracket 5, the extension portions 631 of the connection portion 63 are unlikely to curve because moving directions of the bracket-side engagement portions 53 substantially coincide with extending directions of the extension portions 631. Therefore, in the fixing structure 1 of the embodiment shown in Fig. 8, the terminal member 3 is less likely to come off from the bracket 5 than in the fixing structure 1 of the embodiment shown in Fig. 1. Further, in the fixing structure 1 of the embodiment shown in Fig. 8, the linear portions 641 of the biasing portion 64 extend substantially parallel to the abutment surfaces, so that the terminal member 3 is more unlikely to come off from the bracket 5.

In the embodiment of Fig. 8, the flexible portion 632 is provided such that the first element 632a and the second element 632b extend radially inward of the clip 6. Providing the flexible portion 632 inside the clip 6 makes it possible to avoid interference between the flexible portion 632 and other members.

In the fixing structure 1, in a state where the terminal member 3 and the clip 6 are assembled into the bracket 5, a gap can be provided between notch portions N provided in the flange portion 32d of the terminal member 3 and the clip-side engagement portions 62.

The flange portion 32d has a protrusion portion P that protrudes radially outward on a side where the terminal member 3 is removed from the bracket 5. The protrusion portion P has a width in a direction perpendicular to both the protruding direction and the axial direction. The flange portion 32d has the notch-shaped notch portions N outside the protrusion portions P as seen in the width direction. The flange portion 32d has steps formed by a leading end surface as seen in a direction in which the protrusion portion P protrudes and flat surfaces N1 of the notch portions N, and has a recess formed in a direction around the axis of the terminal member 3. The clip-side engagement portions 62 are located in the recess.

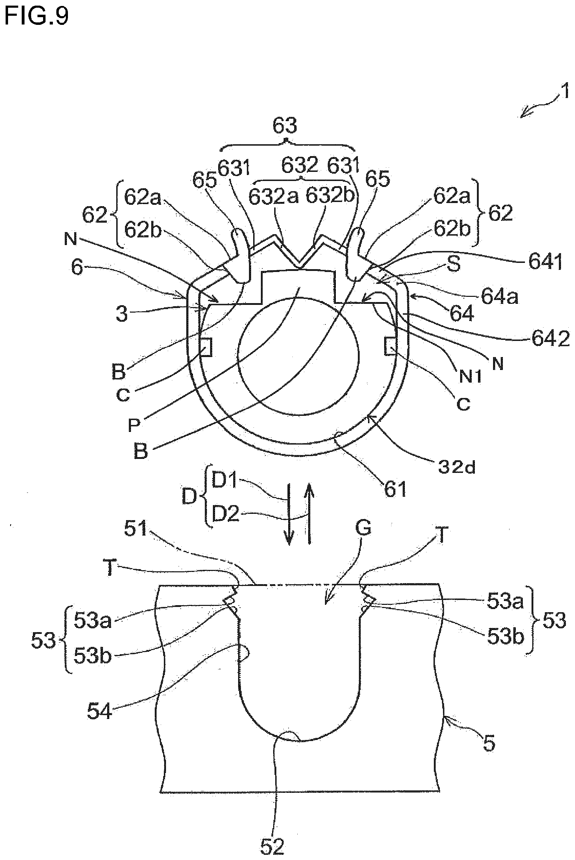

As shown in Fig. 9, the width of the protrusion portion P can be shorter than the interval between the pair of clip-side engagement portions 62.

In an embodiment of Fig. 9 which is a third embodiment, a fixing structure 1 is configured such that a protrusion of a flexible portion 632 toward radial inside of a clip 6 is in contact with or close to a leading end of a protrusion portion P of a flange portion 32d and the clip-side engagement portions 62 of the clip 6 are separated from flat portions N1 of notch portions N. That is, the fixing structure 1 is configured such that an interval between the clip-side engagement portions 62 and the flat portions N1 of the notch portions N is wider than an interval between the leading end of the protrusion portion P and the connection portion 63. Therefore, when a terminal member 3 moves in a removal direction, the terminal member 3 moves upward in Fig. 9 relatively to the clip 6, and the protrusion portion P pushes the connection portion 63 toward radially outside the clip 6. In the embodiment of the fixing structure 1 in which the clip-side engagement portions 62 and the flat portions N1 of the notch portions N are in contact with each other, when the protrusion portion P presses the connection portion 63 toward radially outside of the clip 6, the flat portions N1 of the notch portions N also press the clip-side engagement portions 62 so that bases B of the clip-side engagement portions 62 slide on the flat portions N1. When the clip-side engagement portions 62 slide on the flat portions N1, the clip-side engagement portions 62 are relatively likely to disengage from the bracket-side engagement portions 53. However, in the embodiment of Fig. 9, the clip-side engagement portions 62 are separated from the flat portions N1 to make unlikely to occur sliding between the clip-side engagement portions 62 and the flat portions N1 so that the clip-side engagement portions 62 are less likely to come off from the bracket-side engagement portions 53.

In the fixing structure 1, the pair of clip-side engagement portions 62 is connected by the connection portion 63. Therefore, the clip-side engagement portions 62 is connected to each other by the connection portion 63 so that the clip 6 is less likely to twist due to a positional shift of one of the clip-side engagement portions 62 from the other clip-side engagement portion 62 in the axis X direction. Therefore, for example, even when an external force is applied to the terminal member 3 due to the swinging of the second long member 4 and a force of twisting the clip 6 is applied to the clip 6 through the terminal member 3, the connection portion 63 suppresses the twist of the clip 6 to maintain the engagement of the clip 6 with the bracket 5. The opening of the clip 6 extends a diameter, and the clip 6 is mounted on the mounting target portion 32b. However, if an attempt is made to suppress the twist of the clip 6 only by the biasing portion 64, the biasing force of the biasing portion 64 will increase. The clip 6 has the biasing portion 64 and the connection portion 63 so that the connection portion 63 suppresses separation of both ends of the biasing portion 64. This allows the clip 6 to be more easily assembled to the terminal member 3.

### Reference Signs List

- 1: Fixing structure
- 2: First long member (outer casing)
- 3: Terminal member
- 31: Main body portion
- 31a: Protrusion
- 32: Attachment portion
- 32a: Engagement portion
- 32b: Mounting target portion
- 32c: Shaft portion
- 32d: Flange portion
- 4: Second long member (guide pipe;
- 5: Bracket
- 51: Insertion portion
- 52: Installation portion
- 53: Bracket-side engagement portion
- 53a: First wall portion
- 53b: Second wall portion
- 54: Guide portion
- 5A: One surface of bracket
- 5B: Other surface of bracket
- 6: Clip
- 61: Mounting portion
- 62: Clip-side engagement portion
- 62a: First engagement portion
- 62b: Second engagement portion
- 63: Connection portion
- 631: Extension portion
- 632: Flexible portion
- 632a: First element
- 632b: Second element
- 63a: Folded portion
- 64: Biasing portion
- 64a: Deformation portion
- 641: One linear portion
- 642: Other linear portion
- 65: Knob
- A: Long member assembly
- B: Base
- C: Concave groove
- D: Insertion/removal directions
- D1: Insertion direction
- D2: Removal direction
- G: Groove
- I: Inner cable
- N: Notch portion
- N1: Flat portion
- P: Protrusion portion
- R: Rod
- RE1: Restriction portion
- RE2: Restricted portion
- S: Space
- T: Tapered portion
- X: Axis of terminal member

## Claims

1. A fixing structure for a long member, comprising:
a first long member (2);
a terminal member (3) provided at a terminal of the first long member(2);
a second long member (4) connected to a side of the terminal member (3) opposite to the first long member (2);
a bracket (5) to which the terminal member (3) is fixed; and
a clip (6) that suppresses relative movement of the terminal member (3) with respect to the bracket (5), wherein
the bracket (5) has an insertion portion (51) into which the terminal member (3) is inserted, an installation portion (52) in which the terminal member (3) is installed, and bracket-side engagement portions (53) with which the clip (6) engages,
the terminal member (3) has an engagement portion (32a) that engages with the bracket (5) to suppress axial movement, and a mounting target portion (32b) that is provided on an outer periphery and to which the clip (6) is mounted,
the clip (6) includes a mounting portion (61) that is mounted on the mounting target portion (32b), clip-side engagement portions (62) that engage with the bracket-side engagement portions (53), a connection portion (63) that connects between the clip-side engagement portions (62), and a biasing portion (64) that connects to the clip-side engagement portions (62),
the connection portion (63) has spring elasticity that allows separation and approach of the clip-side engagement portions (62), and
in a state where the terminal member (3) is installed in the installation portion (52) of the bracket (5) via the insertion portion (51), the clip-side engagement portions (62) of the clip (6) mounted on the mounting target portion (32b) of the terminal member (3) engage with the bracket-side engagement portions (53) to suppress movement of the terminal member (3) in an axis direction of the first long member (2) and in a direction perpendicular to the axis direction, wherein the clip (6) is formed in an annular shape in which removal of the clip (6) in the direction perpendicular to the axial direction of the first long member (2) is suppressed,
**characterized in that**:
the clip-side engagement portions (62) are shifted in an axis direction of the first long member (2) from the mounting portion (61) and the biasing portion (64).

## Patentansprüche

1. Befestigungsstruktur für ein langes Element, umfassend:
ein erstes langes Element (2);
ein Anschlusselement (3), das an einem Anschluss des ersten langen Elements (2) bereitgestellt ist;
ein zweites langes Element (4), das mit einer dem ersten langen Element (2) gegenüberliegenden Seite des Anschlusselements (3) verbunden ist;
einen Bügel (5), an dem das Anschlusselement (3) befestigt ist; und
eine Klammer (6), die eine Relativbewegung des Anschlusselements (3) in Bezug auf den Bügel (5) unterdrückt, wobei
der Bügel (5) einen Einführungsabschnitt (51) aufweist, in den das Anschlusselement (3) eingeführt ist, einen Installationsabschnitt (52), in dem das Anschlusselement (3) installiert ist, und bügelseitige Eingriffsabschnitte (53), mit denen die Klammer (6) in Eingriff steht,
das Anschlusselement (3) einen Eingriffsabschnitt (32a) aufweist, der in den Bügel (5) eingreift, um eine axiale Bewegung zu unterdrücken, und einen Montagezielabschnitt (32b), der an einem Außenumfang bereitgestellt ist und an dem die Klammer (6) montiert ist,
die Klammer (6) einen Montageabschnitt (61) einschließt, der an dem Montagezielabschnitt (32b) montiert ist, klammerseitige Eingriffsabschnitte (62), die mit den bügelseitigen Eingriffsabschnitten (53) in Eingriff stehen, einen Verbindungsabschnitt (63), der zwischen den klammerseitigen Eingriffsabschnitten (62) verbunden ist, und einen Vorspannabschnitt (64), der mit den klammerseitigen Eingriffsabschnitten (62) verbunden ist,
der Verbindungsabschnitt (63) eine Federelastizität aufweist, die eine Trennung und Annäherung der klammerseitigen Eingriffsabschnitte (62) erlaubt, und
in einem Zustand, in dem das Anschlusselement (3) in dem Installationsabschnitt (52) des Bügels (5) über den Einführungsabschnitt (51) installiert ist, die klammerseitigen Eingriffsabschnitte (62) der Klammer (6), die auf dem Montagezielabschnitt (32b) des Anschlusselements (3) montiert ist, die bügelseitigen Eingriffsabschnitte (53) in Eingriff nimmt, um eine Bewegung des Anschlusselements (3) in einer Achsrichtung des ersten langen Elements (2) und in einer Richtung senkrecht zu der Achsrichtung zu unterdrücken, wobei die Klammer (6) in einer ringförmigen Form ausgebildet ist, in der ein Entfernen der Klammer (6) in der Richtung senkrecht zu der axialen Richtung des ersten langen Elements (2) unterdrückt wird,
**dadurch gekennzeichnet, dass**:
die klammerseitigen Eingriffsabschnitte (62) in einer Achsrichtung des ersten langen Elements (2) gegenüber dem Montageabschnitt (61) und dem Vorspannabschnitt (64) verschoben sind.

## Revendications

1. Structure de fixation pour un élément allongé, comprenant :
un premier élément allongé (2) ;
un élément d'extrémité (3) disposé à une extrémité du premier élément allongé (2) ;
un second élément allongé (4) connecté à un côté de l'élément d'extrémité (3) à l'opposé du premier élément allongé (2) ;
un support (5) sur lequel l'élément terminal (3) est fixé ; et
une pince (6) qui supprime le mouvement relatif de l'élément d'extrémité (3) par rapport au support (5), dans laquelle
le support (5) a une partie d'insertion (51) dans laquelle l'élément d'extrémité (3) est inséré, une partie d'installation (52) dans laquelle l'élément d'extrémité (3) est installé et des parties de mise en prise côté support (53) avec lesquelles la pince (6) vient en prise,
l'élément d'extrémité (3) a une partie de mise en prise (32a) qui vient en prise avec le support (5) pour supprimer le mouvement axial, et une partie cible de montage (32b) qui est disposée sur une périphérie extérieure et sur laquelle la pince (6) est montée,
la pince (6) inclut une partie de montage (61) qui est montée sur la partie cible de montage (32b), des parties de mise en prise côté pince (62) qui viennent en prise avec les parties de mise en prise (53) côté support, une partie de connexion (63) qui se connecte entre les parties de mise en prise(62) côté pince, et une partie de rappel (64) qui se connecte aux parties de mise en prise (62) côté pince,
la partie de connexion (63) a une élasticité de ressort qui permet une séparation et un rapprochement des parties de mise en prise (62) côté pince, et
dans un état dans lequel la membrure d'extrémité (3) est installée dans la partie d'installation (52) du support (5) via la partie d'insertion (51), les parties de mise en prise (62) côté pince de la pince (6) montées sur la partie cible de montage (32b) de l'élément d'extrémité (3) viennent en prise avec les parties de mise en prise (53) côté support pour supprimer le mouvement de l'élément d'extrémité (3) dans une direction d'axe du premier élément allongé (2) et dans une direction perpendiculaire à la direction d'axe, dans laquelle la pince (6) est formée selon une forme annulaire dans laquelle un enlèvement de la pince (6) dans la direction perpendiculaire à la direction axiale du premier élément allongé (2) est supprimé,
**caractérisé en ce que** :
les parties de mise en prise (62) côté pince sont décalées dans une direction d'axe du premier élément allongé (2) depuis la partie de montage (61) et la partie de rappel (64).
